# EUROPÄISCHE PATENTSCHRIFT

(11) **EP 1 283 344 B1**
(45) Veröffentlichungstag und Bekanntmachung des Hinweises auf die Patenterteilung: **14.03.2007**
(21) Anmeldenummer: 02405577.4
(22) Anmeldetag: 09.07.2002
(51) Int. Cl.: F02F 1/00, F02B 77/08, F16J 9/20

(54) **Kolbenring**
Piston ring
Segment piston

(30) Priorität: 06.08.2001 EP 01810761
(43) Veröffentlichungstag der Anmeldung: 12.02.2003
(73) Patentinhaber: Wärtsilä Schweiz AG, 8401 Winterthur (CH)
(72) Erfinder: Svimbersky, Karl, 8404 Winterthur (CH)
(74) Vertreter: Sulzer Management AG

(56) Entgegenhaltungen:
- EP-A- 0 438 360
- EP-A- 0 706 039
- DE-A- 2 139 383
- DE-A- 2 728 725
- DE-B- 1 251 114
- GB-A- 1 503 255
- JP-A- 58 065 369
- US-A- 4 143 319
- PATENT ABSTRACTS OF JAPAN vol. 013, no. 475 (P-950), 27. Oktober 1989 (1989-10-27) & JP 01 187401 A (MITSUBISHI HEAVY IND LTD), 26. Juli 1989 (1989-07-26)
- PATENT ABSTRACTS OF JAPAN vol. 1999, no. 11, 30. September 1999 (1999-09-30) & JP 11 173275 A (HITACHI LTD;HITACHI TECHNO ENG CO LTD), 29. Juni 1999 (1999-06-29)
- PATENT ABSTRACTS OF JAPAN vol. 010, no. 189 (M-494), 3. Juli 1986 (1986-07-03) & JP 61 031768 A (MITSUBISHI HEAVY IND LTD), 14. Februar 1986 (1986-02-14)

## Beschreibung

Die Erfindung betrifft einen Kolbenring gemäss Oberbegriff von Anspruch 1, eine Anordnung mit einem Kolben, der solche Kolbenringe trägt, sowie eine Brennkraftmaschine, insbesondere ein Grossdieselmotor, mit einer derartigen Anordnung.

Aus der EP-A- 0 706 039 (= P.6927) ist eine Vorrichtung mit einem Sensor bekannt, mit welcher der Verschleisszustand eines Kolbenrings in einer Brennkraftmaschine überwachbar ist. Der Kolbenring weist eine Gleitfläche auf, die durch ein Zusammenspiel mit einem Schmiermittel eine Dichtung zwischen einem Zylindereinsatz und einem Kolben bildet. Der Kolbenring ist aus einem ferromagnetischen Material gefertigt. In einer Randzone innerhalb der zylindrischen Gleitfläche, die zumindest teilweise für einen Verschleissabtrag vorgesehen ist, befindet sich eine Modifikation in Form einer Einlage aus einem nicht magnetisierbaren Material. Diese Einlage ist ein ringförmiger Einschluss, der beispielsweise aus einer Kupfer/Aluminium-Bronce besteht und dessen Querschnitt sich senkrecht zur Gleitfläche keilartig verjüngt. Der Sensor ist eine im Zylindereinsatz angeordnete Abtasteinrichtung, die einen magnetischen Kreis und einen an diesen gekoppelten elektrischen Kreis umfasst. Bei einer Bewegung der Modifikation vor dem stationären, im Zylindereinsatz angeordneten Sensor werden in diesem Signale in Form von induzierten Spannungen erzeugt. Diese Signale sind vom Verschleisszustand abhängig und können daher zur Überwachung des Ausmasses des Verschleisses ausgewertet werden.

Die genannte Modifikation des Kolbenrings ist bei bekannten Brennkraftmaschinen jeweils im mittleren Bereich der Gleitfläche angeordnet. Dieser mittlere Bereich muss im Hinblick auf die Dichtwirkung besonders exakt ausgebildet sein. Die Modifikation in Form einer Bronce-Einlage bedeutet eine Schwächung des Kolbenrings, durch welche die Qualität der Gleitfläche beeinträchtigt wird. Es ist daher vorgeschlagen worden, den Verschleisszustand des Kolbenrings mit anderen Mitteln zu überwachen. In der EP-A 1 006 271 (= P.6927) ist eine Alternative beschrieben.

Aufgabe der Erfindung ist es, eine weitere Alternative zu schaffen, die eine Überwachung des Verschleisszustands eines Kolbenrings ermöglicht und für die der Nachteil der aus der EP-A- 0 706 039 bekannten Lösung ausgeräumt ist. Diese Aufgabe ist mit dem im Anspruch 1 definierten Kolbenring lösbar.

Der abhängige Anspruch 2 betrifft eine vorteilhafte Ausführungsform des erfindungsgemässen Kolbenrings. Eine Anordnung mit diesem Kolbenring und einem entsprechenden Sensor, vorgesehen für eine Brennkraftmaschine, ist Gegenstand der Ansprüche 3 bis 5. Der Anspruch 6 bezieht sich auf eine Brennkraftmaschine mit der erfindungsgemässen Anordnung.

Nachfolgend wird die Erfindung anhand der Zeichnungen erläutert. Es zeigen:
- Fig. 1: einen Längsschnitt durch einen Kolben, der Kolbenringe trägt und der innerhalb eines Zylindereinsatzes angeordnet ist,
- Fig. 2: Längsschnitt durch einen Kolbenring, der zusammen mit der inneren Oberfläche des Zylindereinsatzes eine Abdichtung in axialer Richtung herstellt,
- Fig. 3: ein Detail zu einem zweiten Kolbenring und
- Fig. 4: eine Ausführungsform eines erfindungsgemässen Kolbenrings.

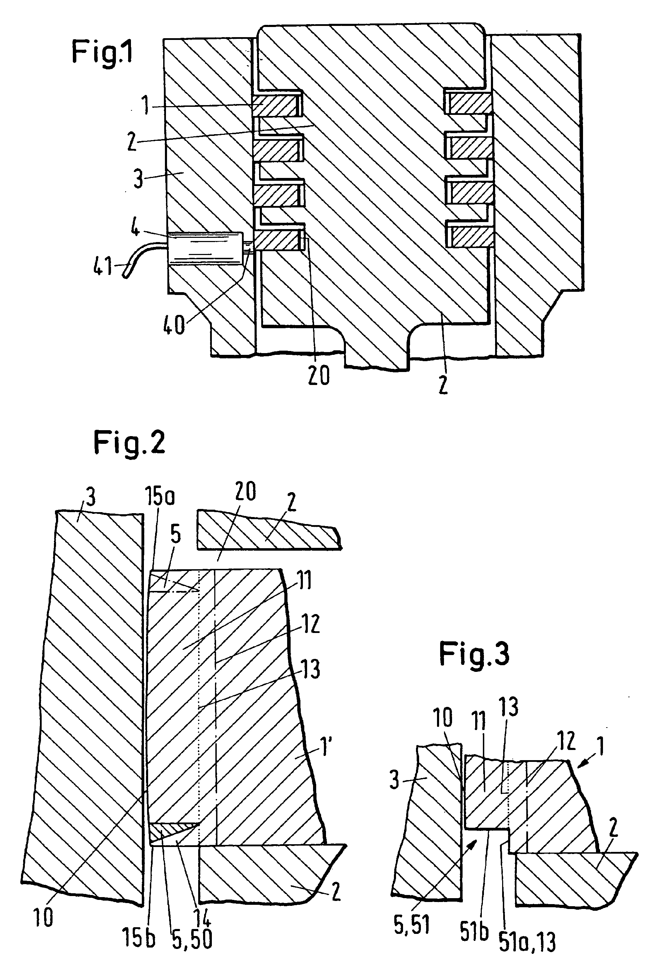

Der in Fig. 1 als Längsschnitt dargestellte Kolben 2 trägt Kolbenringe 1 in Nuten 20. Der Kolben 2 ist innerhalb eines Zylindereinsatzes 3 angeordnet. Der Kolbenring 1 - siehe Fig. 2 - weist eine Gleitfläche 10 auf, die durch ein Zusammenspiel mit einem nicht dargestellten Schmiermittel eine Dichtung zwischen dem Zylindereinsatz 3 und dem Kolben 2 bildet. Die leicht ballig geformte Gleitfläche 10 befindet sich auf einer Randzone 11 des Kolbenrings 1, die zumindest teilweise für einen Verschleissabtrag vorgesehen ist. Eine maximale Verschleisstiefe liegt auf einem punktiert gezeichneten Niveau 13; die Randzone 11 reicht bis zu einem strichpunktiert angegebenen Niveau 12. Im Zylindereinsatz 3 ist ein Sensor 4 angeordnet, der über ein Kopplungsteil 40 mit der inneren Wand des Zylindereinsatzes 3 verbunden ist und der über eine Leitung 41 an ein nicht dargestelltes Auswertesystem angeschlossen ist. Mit einem zweiten, nicht dargestellten Sensor, der zum ersten Sensor 4 diametral gegenüber angeordnet ist, lässt sich die Genauigkeit der Messung verbessern.

In die Randzone 11 ist eine Modifikation 5 eingearbeitet, die bei einer Bewegung vor dem stationären Sensor 4 in diesem Signale erzeugt oder Signale, die vom Sensor 4 emittiert werden, beinflusst. Mit den erzeugten oder beeinflussten Signalen empfängt und registriert der Sensor 4 Information über das Ausmass des Verschleissabtrags. Die Information wird vom Sensor 4 an das Auswertsystem weitergeleitet. Die Modifikation 5 ist in einem Saumbereich 14 der Randzone 11 an der oberen Kante 15a und/oder an der unteren Kante 15b der Gleitfläche 10 angeordnet. Die Breite des Saumbereichs 14 ist kleiner als 20% der Breite der Gleitfläche 10, wobei diese Breite der Abstand zwischen den beiden Kanten 15a und 15b ist.

Im Kolbenring 1 der Fig. 2 ist die Modifikation 5 als ein ringförmiger Einschluss 50 in einem Grundkörper 1' ausgebildet. Der Querschnitt dieses Einschlusses 50, der sich im Saumbereich 14 der unteren Kante 15b befindet, verjüngt sich senkrecht zur Gleitfläche 10 keilartig. Eine entsprechende Modifikation an der oberen Kante 15b, die zusätzlich oder alternativ vorhanden sein kann, ist strichpunktiert angedeutet. Der Einschluss 50 besteht aus einem nicht magnetisierbaren Material, während das Material des Grundkörpers 1' magnetisierbar, insbesondere ferromagnetisch ist. Als Sensor 4 ist die aus der EP-A- 0 706 039 bekannten Abtasteinrichtung vorgesehen.

Ein Detail zu einem zweiten Kolbenring 1 ist in Fig. 3 abgebildet. Bei diesem Kolbenring 1, der bereits aus der DE-A-2139383 bekannt ist, ist die Modifikation 5 in Form einer Kehlung 51 ausgebildet. Die Kehlung 51 weist zwei Teilflächen 51 a und 51 b auf, nämlich eine zur zylindrischen Gleitfläche 10 konzentrische Referenzfläche 51 a und eine Flanke 51 b, die senkrecht oder angenähert senkrecht zur Gleitfläche 10 steht, wobei die Referenzfläche 51a auf einem Niveau 13a unterhalb der Gleitfläche 10 angeordnet ist, dessen Abstand von der Gleitfläche 10 vor dem Verschleissabtrag gleich der maximalen Verschleisstiefe (Niveau 13) oder grösser als diese ist.

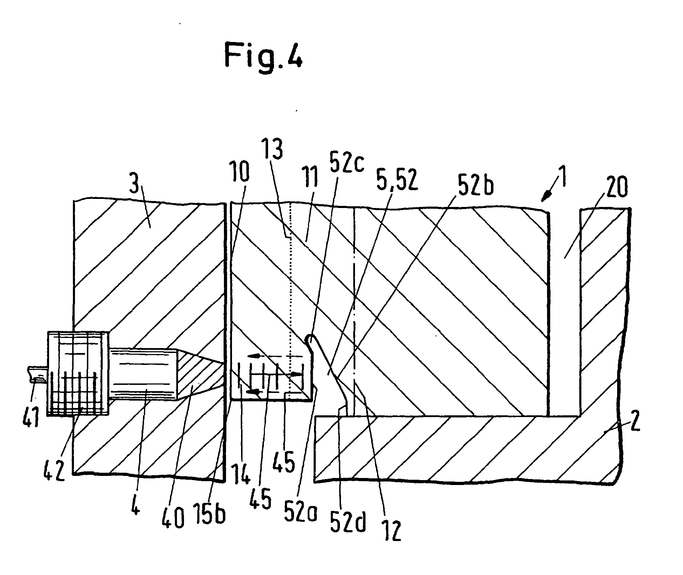

Die Fig. 4 zeigt die Modifikation 5 einer dritten Ausführungsform des erfindungsgemässen Kolbenrings 1. Diese Modifikation 5 ist in Form einer zur Gleitfläche 10 konzentrischen Nut 52 ausgebildet. Die Nut 52 weist eine zur Gleitfläche 10 konzentrische Flanke 52a auf, die als Reflexionsfläche für ein Ultraschallsignal 44 zur Erzeugung eines Echosignals 45 verwendbar ist. Die zweite Flanke 52b ist mit Vorteil geneigt ausgebildet, so dass Ultraschall, der durch die erste Flanke 52a durchgelassen (transmittiert) wird, kein weiteres Echosignal in den Sensor 4 reflektiert. Der Grund 52c der Nut 52 ist mit Vorteil gerundet ausgebildet, so dass sich keine von dort ausgehenden Risse im Kolbenring 1 ausbilden.

Der mit einem Befestigungsteil 42 am Zylindereinsatz 3 angebrachte Sensor 4 ist ein Ultraschallwandler, wie er beispielsweise aus der EP-A 1 006 271 bekannt ist. Der Sensor 4 emittiert über ein Koppelungsstück 40 das Ultraschallsignal 44 in den unteren Saumbereich 14 des Kolbenrings 1. (Es ist die momentante Situation dargestellt, in welcher sich der Verschleisszustand an dem auf und ab bewegten Kolbenring 1 durch den Sensor 4 bestimmen lässt.) Das Ultraschallsignal 44 wird teilweise an der Flanke 52a der Nut 52 als das Echosignal 45 reflektiert. Durch Vergleichen des emittierten Signals 44 mit dem Echosignal 45 in einem Auswertsystem lässt sich der Abstand zwischen der Gleitfläche 10 und der Flanke 52a und damit der Verschleisszustand des Kolbenrings 1 bestimmen.

Bei dem in Fig. 3 gezeigten Ausführungsbeispiel wird die Tiefe der Kehlung 51, d.h. der Abstand zwischen der Gleitfläche 10 und einer zur Gleitfläche 10 parallelen Referenzfläche 51 a bestimmt. Dabei wird mit Vorteil ein Wirbelstromsensor eingesetzt, dessen Signale mit einer speziellen Elektronik auswertbar sind.

Die Modifikation 5 des Kolbenrings 1 ist im Ausführungsbeispiel der Fig. 4 so ausgebildet, dass der Verschleissabtrag bei einer Wartung durch Inspektion mittels optischer und/oder mechanischer Hilfsmittel bestimmbar ist und zwar mit einer Inspektion durch Lufteinlassöffnungen des Zylinders: Es lässt sich der Abstand zwischen der Gleitfläche 10 und einem vorstehenden Teil 52d der Unterseite des Kolbenrings 1 mit einem mechanischen Hilfsmittel messen. Eine entsprechende Inspektion ist auch beim zweiten Ausführungsbeispiel, Fig. 3, möglich. Beim ersten Ausführungsbeispiel, Fig. 2, kann mit einem optischen Hilfsmittel, beispielsweise mit einer Messlupe gemessen werden, wie breit der sichtbare Bereich der Einlage 50 auf der Gleitfläche 10 ist.

Die Anordnung mit einem Zylindereinsatz 3 sowie einem in diesem angeordneten Sensor 4 und einem Kolben 2, der erfindungsgemässe Kolbenringe trägt, ist für eine Brennkraftmaschine, insbesondere einen Grossdieselmotor vorgesehen. Der Sensor 4 erzeugt im Zusammenspiel mit der auf dem Kolbenring 1 angebrachten Modifikation 5 ein Signal, das über eine Leitung 41 an ein elektronisches Auswertsystem übermittelt wird. Aufgrund dieses Signals ist der Zustand des Kolbenrings bezüglich dem Verschleissabtrag bestimmbar. Das Auswertsystem ist mit Vorteil so ausgebildet, dass eine zeitliche Änderung des Kolbenringzustands dauernd bei laufendem Motor - d.h. on line - überwachbar ist. Die Beobachtung dieser zeitlichen Änderung erlaubt den Rückschluss beispielsweise auf eine Verwendung eines ungeeigneten Brennstoffs, wenn die Verschleissrate überdurchschnittlich gross ist.

## Patentansprüche

1. Kolbenring (1) mit einer Gleitfläche (10), die in einer Brennkraftmaschine durch ein Zusammenspiel mit einem Schmiermittel eine Dichtung zwischen einem Zylindereinsatz (3) und einem Kolben (2) bildet und die sich auf einer Randzone (11, 12) des Kolbenrings befindet, die zumindest teilweise für einen Verschleissabtrag bis zu einer maximalen Verschleisstiefe (13) vorgesehen ist,
wobei in die Randzone eine Modifikation (5) zwecks Ermittlung des Verschleisszustands eingearbeitet ist, die bei einer Bewegung vor einem stationären, im Zylindereinsatz angeordneten Sensor (4) Signale erzeugt oder Signale, die vom Sensor emittiert werden, beinflusst, so dass dabei eine durch den Sensor registrierbare Information über das Ausmass des Verschleissabtrags entsteht,
wobei ferner die Modifikation (5) in einem Saumbereich (14) der Randzone (11, 12) an der oberen und/oder an der unteren Kante (15a, 15b) der Gleitfläche (10) angeordnet ist, die Breite des Saumbereichs kleiner als 20 % der Breite der Gleitfläche ist, und der Kolbenring einen Grundkörper (1') umfasst, der in einem mittleren, ausserhalb des Saumbereichs liegenden Bereich der Randzone und angrenzend an die Gleitfläche keine schwächende Modifikation wie beispielsweise eine Bronce-Einlage enthält,
**dadurch gekennzeichnet, dass** die Modifikation (5) in Form einer zur Gleitfläche (10) konzentrischen Nut (52) im Grundkörper (1') ausgebildet ist und dass diese Nut eine zur Gleitfläche konzentrische Flanke (52a) aufweist, die als Reflexionsfläche für ein Ultraschallsignal (44, 45) verwendbar ist.

2. Kolbenring nach Anspruch 1, **dadurch gekennzeichnet, dass** die Modifikation (5) derart ausgebildet ist, dass der Verschleissabtrag bei einer Wartung durch Inspektion mittels optischer und/oder mechanischer Hilfsmittel bestimmbar ist, wobei als optisches Hilfsmittel beispielsweise eine Messlupe und als mechanisches Hilfsmittel insbesondere ein Gerät zum Messen des Abstands zwischen der Gleitfläche (10) und einer Referenzfläche (52d) vorgesehen sein können.

3. Anordnung in einer Brennkraftmaschine, mit einem Zylindereinsatz (3) und einem in diesem angeordneten Sensor (4) und einem Kolben (2), der Kolbenringe (1) gemäss Anspruch 1 oder 2 trägt, wobei der Sensor im Zusammenspiel mit der auf dem Kolbenring angebrachten Modifikation (5) ein Signal (45) erzeugt und dieses Signal einem elektronischen Auswertsystem übermittelt, mit dem der Zustand des Kolbenrings bezüglich dem Verschleissabtrag bestimmbar ist.

4. Anordnung nach Anspruch 3, **dadurch gekennzeichnet, dass** mit dem Auswertsystem eine zeitliche Änderung des Kolbenringzustands bestimmbar ist.

5. Anordnung nach Anspruch 3 oder 4, **dadurch gekennzeichnet, dass** der Sensor (4) ein Gerät oder Teil eines Geräts ist, mit dem sich Ultraschall (44) emittieren und reflektierter Ultraschall (45) registrieren lässt.

6. Brennkraftmaschine, insbesondere Grossdieselmotor mit einer Anordnung gemäss einem der Ansprüche 3 bis 5.

## Claims

1. A piston ring (1) having a sliding surface (10) which forms a seal in an internal combustion engine between a cylinder insert (3) and a piston (2) by an interaction with a lubricant and which is located at a marginal zone (11, 12) of the piston ring which is provided at least in part for an removal by wear up to a maximum wear depth (13), with a modification (5) being worked into the marginal zone for the purpose of determining the state of wear and which, on a movement in front of a stationary sensor (4) arranged in the cylinder insert, generates signals or influences signals which are emitted by the sensor such that information on the extent of the amount removed by wear is thereby generated which can be registered by the sensor, with the modification (5) being further arranged in an edge region (14) of the marginal zone (11, 12) at the upper and/or at the lower edge (15a, 15b) of the sliding surface (10), with the width of the edge region being less than 20% of the width of the sliding surface and the piston ring including a base body (1') which does not contain a weakening modification, such as for example a bronze insert in a middle region of the marginal zone lying outside of the edge region and adjoining the sliding surface, **characterized in that** the modification (5) is formed in the form of a groove (52) in the base body (1') concentric to the sliding surface (10); and **in that** this groove has a flank (52a) concentric to the sliding surface which can be used as a reflection surface for an ultrasonic signal (44, 45).

2. A piston ring in accordance with claim 1, **characterized in that** the modification (5) is formed such that the amount removed by wear can be determined during a servicing by inspection by means of an optical and/or mechanical aid, with a measuring magnifier being provided, for example, as the optical aid and in particular an instrument for the measurement of the spacing between the sliding surface (10) and a reference surface (52d) being provided as the mechanical aid.

3. An arrangement in an internal combustion engine comprising a cylinder insert (3) and a sensor (4) arranged in this and a piston (2) which carries piston rings (1) in accordance with claim 1 or claim 2 5, wherein the sensor generates a signal (45) by interaction with the modification (5) applied to the piston ring and transmits this signal to an electronic evaluation system with which the state of the piston ring can be determined with reference to the amount removed by wear.

4. An arrangement in accordance with claim 3, **characterized in that** a change with respect to time of the piston ring state can be determined by the evaluation system.

5. An arrangement in accordance with claim 3 or claim 4, **characterized in that** the sensor (4) is an instrument or part of an instrument with which ultrasound (44) can be emitted and with which reflected ultrasound (45) can be registered.

6. An internal combustion engine, in particular a large diesel engine, comprising an arrangement in accordance with any one of claims 3 to 5.

## Revendications

1. Segment de piston (1) avec une face de glissement (10) qui forme dans un moteur à combustion interne ensemble avec un agent de lubrification, une étanchéité entre un insert de cylindre (3) et un piston (2) et qui se trouve sur une zone de bord (11, 12) du segment de piston, qui est prévue au moins partiellement pour un enlèvement par usure jusqu'à une profondeur d'enlèvement maximale (13), où est ménagée dans la zone de bord une modification (5) pour déterminer l'état d'usure qui, lors d'un mouvement devant un capteur stationnaire (4) disposé dans l'insert de cylindre, produit des signaux ou agit sur des signaux émis par le capteur de manière à produire ainsi une information enregistrable par le capteur concernant le degré de l'enlèvement par usure, où en outre la modification (5) est disposée dans une zone de lisière (14) de la zone de bord (11, 12), à l'arête supérieure et/ou inférieure (15a, 15b) de la face de glissement (10), la largeur de la zone de lisière est plus petite que 20% de la largeur de la face de glissement, et le segment de piston comprend un corps de base (1') qui contient dans une zone médiane de la zone de bord, située à l'extérieur de la zone de lisière et d'une manière contiguë à la face de glissement, aucune modification affaiblissante, comme par exemple un insert en bronze, **caractérisé en ce que** la modification (5) est réalisée sous la forme d'une rainure (52) concentrique à la face de glissement (10) dans le corps de base (1'), et que cette rainure présente un flanc (52a) concentrique à la face de glissement qui est utilisable comme face de réflexion pour un signal ultrasonore (44, 45).

2. Segment de piston selon la revendication 1, **caractérisé en ce que** la modification (5) est réalisée de telle sorte que l'enlèvement par usure peut être déterminé lors d'un entretien par inspection par des moyens auxiliaires optiques et/ou mécaniques, où peuvent être prévus comme moyen auxiliaire optique par exemple une loupe de mesure et comme moyen auxiliaire mécanique, en particulier un appareil pour mesurer l'écart entre la face de glissement (10) et une face de référence (52d).

3. Agencement dans un moteur à combustion interne, avec un insert de cylindre (3) et un capteur (4) disposé dans celui-ci et un piston (2) qui porte les segments de piston (1) selon la revendication 1 ou 2, où le capteur ensemble avec la modification (5) disposée sur le segment de piston produit un signal (45) et transmet ce signal à un système d'évaluation électronique au moyen duquel peut être déterminé l'état du segment de piston concernant l'enlèvement par usure.

4. Agencement selon la revendication 3, **caractérisé en ce qu'**au moyen du système d'évaluation, une modification dans le temps de l'état du segment de piston peut être déterminée.

5. Agencement selon la revendication 3 ou 4, **caractérisé en ce que** le capteur (4) est un appareil ou une partie d'un appareil au moyen duquel peuvent être émis des ultrasons (44) et peuvent être enregistrés des ultrasons réfléchis (45).

6. Moteur à combustion interne, en particulier grand moteur Diesel avec un agencement selon l'une des revendications 3 à 5.
